# EUROPEAN PATENT SPECIFICATION

(11) **EP 3 401 447 B1**
(45) Date of publication and mention of the grant of the patent: **20.01.2021**
(21) Application number: 18171819.8
(22) Date of filing: 11.05.2018
(51) Int. Cl.: E02F 9/08, B62D 55/065, B62D 55/084

(54) **MACHINE MOVING WITH CHAIN TRACKS**
AUF KETTENSCHIENEN FAHRENDE MASCHINE
MACHINE MOBILE MUNIE DE CHAÎNE DE CHENILLES

(30) Priority: 12.05.2017 FI 20174131
(43) Date of publication of application: 14.11.2018
(73) Proprietor: Idea - Keksi Oy, 80400 Ylämylly (FI)
(72) Inventor: Mantsinen, Yrjö Juhani, 80400 Ylämylly (FI)
(74) Representative: Kolster Oy Ab

(56) References cited:
- WO-A1-2008/097146
- WO-A1-2015/053689
- DE-A1- 2 434 556
- US-A- 5 632 350
- US-A1- 2006 113 121

## Description

### Background of the invention

The invention relates to a machine moving on chain tracks. Prior art work machine solutions do not allow an advantageous total solution for work carried out by, for example, a combination of an excavator-loader and a transporter. For the above work, a separate excavator and a separate transfer vehicle for the material have been used. Document WO 2015/053689 A1 discloses an arrangement for a terrain-going motor vehicle. Document US 2006/113121 A1 discloses an articulated dozer with a four point independent suspension system between a chassis and two support frames. Document WO 2008/097146 A1 discloses a vehicle for felling trees and/or transporting pieces of timber.

### Brief description of the invention

In this application, a new total solution according to the invention is put forth for a machine moving on chain tracks and a multi-purpose work machine that on its own carries out, for example, digging work and loading, transferring onto a platform and transportation away from a site. A solution is disclosed, by means of which also other work may be performed, including personnel hoist work, scattering of material onto an underlay, and bulldozer clearing of soil. The multi-purpose work machine provided with chain tracks is terrain-capable and is able to move in a challenging terrain, too. The multi-purpose work machine allows tools to be carried that are needed in levelling operations, excavating work, and snow work. The machine according to the invention is thanks to its extensive equipping potential suitable for enhancing the completion of the diverse tasks that municipalities, parishes, construction companies, contracting companies, machine rental companies, agriculture, the construction, repair, and clearing of power lines, armed forces, recycling material processing, industry and service providers of various kinds are faced with. The multi-purpose work machine moving on chain track digs, loads, lifts and transports, and as a result of its diverse equipping potential is able to carry out different tasks at a job site in an efficient manner. The platform is provided with a tipping device, making the machine suitable for unloading sand, granular material and soil by tipping from the platform. The device may on its own carry out excavator work, loading work, personnel hoist work as well as moving to and from a site. A multi-purpose boom may be equipped modularly and transformably by a personnel hoist, bucket, or grab so that different tasks may be performed with one and the same machine.

An embodiment of the invention comprises a solution in which the machine is controlled by remote control. The machine optionally comprises a camera/cameras for remote control, by means of which an image is obtained from the machine just like from its cabin. There are remote control devices for the remote control of the motor and tools, such as a boom, bucket and similar tools. There is one or more cameras, and advantageously three-dimensional images are produced with a 3D camera / 3D cameras. In such a case, the control device may be remotely located and separate from the machine itself. The cabin may be a control cabin for an operator and control units of the machine and/or a base from the remote control equipment.

In the invention, the realisation of using chain track sets has been made, so that they have on both sides of the machine been pivoted to rock or swing. This way, obstacles can be easily crossed even in a challenging terrain.

The invention is additionally well suited to landscaping, taking care of grounds of properties, and to construction sites.

The working efficiency of a machinery contractor is enhanced when performing many different tasks can be accomplished with one machine without the need for dedicated machines. The multi-purpose work machine according to our invention is usable throughout the year. The inventive machine moving on chain tracks is advantageously frame-steered. It comprises a front frame part and a rear frame part, and between them a cylinder steering module which may comprise one or more cylinders that turn the frame modules and consequently the machine in the desired direction.

The work machine of the invention is a module structure in which the frame modules comprise, on their sides, rolling chain track sets. The modular structure ensures that as the frame is a module structure it is provided with provisions for platforms and tools of various kinds.

The following platforms are used in the invention:
- a fixed platform without a tipping device
- a fixed platform than may be tipped
- a cargo space which may be tipped/lowered/lifted and left on the ground and picked up from the ground; whereby the transport platform is moved with a hook picker, that is, a hook device or a cable device or a cable interchangeable platform device.

The frame part at the front, so the frame module (A1), comprises chain track sets on both sides of the longitudinal axis X10. The chain track sets comprise a frame part and, at the ends, sheave wheels for the chain tracks. The chain track sets are pivoted by their frame to turn around the horizontal axis Z1 at the centre area of the frame of the chain track sets, and advantageously at the vertical centre axis Y1. Turning is also possible at other places along the length of the chain track sets. Through rocking S1, a soft and even touch to the ground is achieved by the chain track set 200, also in a rough terrain. With a chain track, the surface pressure may also be made low. The chain track is moved forward and backward.

The chain tracks may be moved at different speeds and/or to different directions on different sides of the machine, which establishes steering in the direction of movement for the machine, that is, adjustment of the direction of travel, in an embodiment.

Correspondingly, the frame part further back comprising a load unit, so the frame module A3, comprises a similar chain track set arrangement as the chassis module A1: a chain track set frame and, at its ends, sheave wheels and a chain track guided as a loop or ring. The rigid frame is pivoted to rotated around the horizontal axis Z advantageously at the middle of the frame as seen in relation to its length. The pivot axle may also be at another location than the middle. This way, rocking is obtained for the chain track sets as well as their smooth contact to the ground also in uneven terrain.

The inventive machine moving on chain tracks comprises at one end of the frame an upper carriage (B) connected to the frame module (A1) and residing on top of it. It comprises a turning work part which turns advantageously at least 360 degrees unrestrictedly around its vertical axis Y, the part comprising a cabin from which the machine is controlled and steered. The cabin structure is associated with a boom turning at least 360 degrees with it, comprising a bucket, grab, or other tool detachably mounted to it. The most advantageous tool is a bucket, screen bucket, or grab. Controlling may optionally be by remote control. The boom turns with the cabin and advantageously at least 360 degrees around the vertical axis Y. The boom also turns on bearings freely in relation to the cabin. The structural solution of the work part is excavator-like. The boom may be referred to as a multi-purpose boom or a multi-purpose boom structure.

The boom may according to the invention be equipped with a tool which may be replaced with a bucket part or man cage or a separated gripping part, or grab. The boom is hence a multi-purpose boom enabling different kinds of work performances. The different tools, such as a bucket, may be mounted on it detachably advantageously with quick clamping.

The platform and interchangeable platform in an embodiment comprises a chain conveyor at the bottom of the platform, used to unload stabilizing agent, for example, at an earth-moving site.

The multi-purpose work machine is frame-steered. When the boom part is operating, the multi-purpose work machine may be supported with a bulldozer blade to the ground.

The frame in a preferred embodiment of the invention comprises a plurality of module parts, advantageously at least two; a front frame module and a rear frame module, and between them a frame steering module which comprises the hydraulic cylinders which turn the multi-purpose work machine.

In such a case, by changing the module parts, different combinations can be achieved for various needs. The modules are provided with provisions of different kinds for different connection alternatives. So, it is enough to simply know the auxiliary device to be attached, such as a platform, and its installation is ready to be immediately performed. There is no need for machining, welding or any similar arrangements. Cost savings result from storage costs, for example.

Machine steering is advantageously frame-steering carried out by cylinders or an adjustment based on a speed difference between adjacent chain tracks where adjacent chain tracks may be moved in different directions. The direction of the machine may thus be changed.

The machine may comprise a bulldozer blade at the front-most frame module. The bulldozer blade may be pressed to the ground by cylinders whereby the machine may be supported to the ground during operation of the boom not only by the bulldozer blade but also by the support legs.

In an embodiment, the machine is optionally provided by an additional power source which is placed on top of the frame immediately behind the platform and work part. The additional power source may be a diesel motor or, generally speaking, an internal combustion engine, and it may comprise a pump device to create hydraulic pressure for the hub motors on the rear axles. The arrangement may also be entirely electric and battery-based, or a combination of an internal combustion engine and an electric motor, or a combination of a hydraulic system and electric system. The additional power source bring the additional energy needed to the work device outfit.

The inventive machine moving on chain tracks is characterized by what is disclosed in the claims.

### Brief description of the figures

The invention will in the following be described by reference to the embodiments in the attached drawings. It is not, however, the intention to restrict the invention solely to them.
Figure 1 shows a machine equipped with a tipping load unit.
Figure 2 shows a work position of the machine.
Figure 3 illustrates an embodiment with an interchangeable platform. Shown is a hook device in connection with it.
Figure 4 shows a cable device in connection with an interchangeable platform.
Figure 5a shows a fixed platform.
Figure 5b shows a tipping platform embodiment.
Figure 6 illustrates a module structure.
Figure 7 shows a hook device and a frame structure of a log trailer.
Figure 8 shows a cable device solution in the handling of an interchangeable platform and in connection with a module A3.
Figure 9 shows a frame steering module A100 in the middle, comprising frame-steering cylinders n1 and n2.
Figures 10 and 11 illustrate a machine with chain tracks in various terrains.
Figure 12 is a side view of the chain track set.
Figure 13 is a cross section A-A of Figure 12.
Figures 14 to 18 show axonometrically the frame steering module A100 in various usage positions.
Figure 19 is a cross section B-B of Figure 15.
Figure 20 shows axonometrically the first frame module A1, frame steering module A100, and the rearmost frame module A3 comprising a load space.
Figures 21 and 22 show different rotation positions of the frame steering module A100.
Figure 23 is a view of the frame module A3 obliquely from below, comprising a downward beam 800. A corresponding downward beam 800 and bearings 900 may be similar at the frame module A1 as at frame module A3.
Figure 24 shows the machine of Figure 23 obliquely from above.
Figure 25 shows the circled area V1 of Figure 23.
Figure 26 shows chain track sets from the direction of K20 of Figure 23.
Figure 27 shows chain track sets from the direction of K10 of Figure 23.
Figure 28 is a cross section AA-AA of Figure 27.
Figure 29 shows an area B of Figure 28.

### Detailed description of the invention

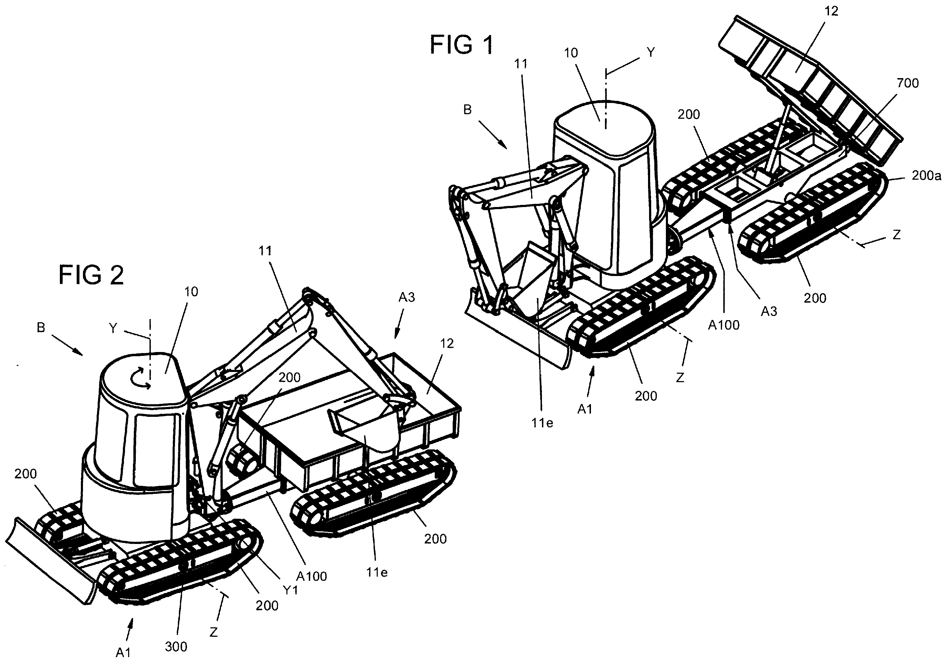

Figures 1 and 2 show axonometrically a machine moving on chain tracks and equipped with a tipping platform. The machine comprises an upper carriage B, or the upper frame, and the undercarriage A, so the lower frame. The upper carriage consists of a cabin 10 and a multi-purpose boom 11 which may together be freely rotated around the vertical axis Y. The total weight of the multi-purpose work machine is 1 to 40 tons. The essential issue in the device according to the invention is that the frame A advantageously comprises a changeable load unit 12, such as an interchangeable platform. The frame in frame modules A1 are denoted by reference number 7000 and in the frame module A3 by reference number 700.

Figure 2 shows the cabin 10 of the machine of Figure 1 and thus the entire work part turned so that the bucket 11e of the boom 11 may drop soil or similar on the platform 12 or generally speaking to a load unit 12. The actual work part and thus the cabin 10 with its boom 11 turns at least 360 degrees. In the most common embodiment, the cabin 10 is the control cabin for the operator and the control devices of the machine. In an embodiment of the invention, the cabin 10 serves as a base for the remote control equipment, such as cameras. advantageously 3D cameras.. With the 3D cameras, three-dimensional images may be created to remote control the device and to remote control work performances. In an embodiment the remote control equipment may be placed in connection with the cabin.

The machine comprises an upper carriage B, that is, a work part, and below it an undercarriage A, which comprises frame modules A1, A100, A3 which are interconnected and of which the first frame module A1 comprises a bearing ring H for the cabin 10 of the upper carriage B. This way, the cabin 10 may be freely rotated around the vertical axis, advantageously unrestrictedly. The cabin structure 10 comprises a boom structure rotating with it, to which a tool such as a bucket may be mounted. The boom structure comprises one or more booms 11, which are moved by cylinder devices such as hydraulic cylinders. A bucket 11e may be detachably hooked up to the boom 11. In addition, the boom structure is advantageously fitted with a bearing to turn on a joint 11a around the vertical axis Y1 in relation to the cabin 10. The vertical axes Y and Y1 are parallel.

A second frame module A3, a so-called load module, has been pivotally connected to the frame module A1, that is, the cabin module, and between the frame modules A1, A3 there are cylinders (n1, n2) by means of which the frame steering of the machine takes place.

The first frame module A1 comprises on both its sides chain track sets 200, both of which are supported by their supports 300 and pivoted to rock (arrow S1) around the transverse axis (z) by means of a bearing 900 on the supports 300, whereby the machine moves smoothly in a varying terrain.

By means of the joint-steering module A100 a second frame module A3 has been pivotally connected to the first frame module. It comprises longitudinal frame beams of the frame 700 and chain track sets 200 on both sides of the frame 700, which are pivoted to rock (S1) supported by their supports 300 and bearings 900 on the support 300 around the transverse Z axis.

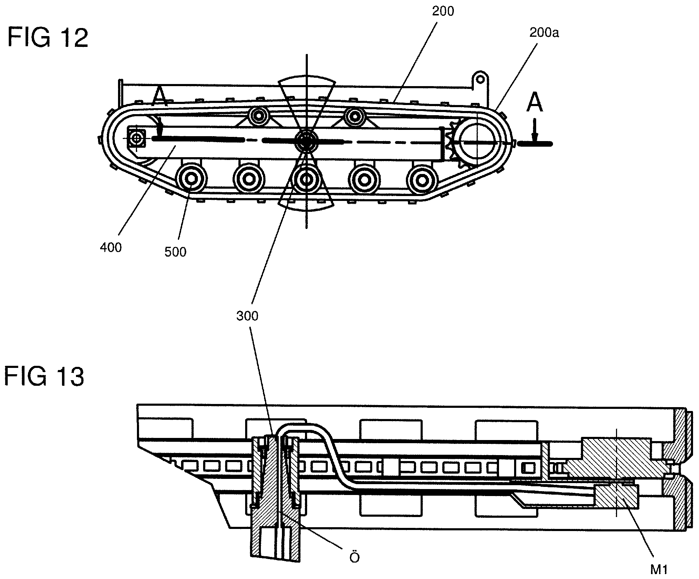

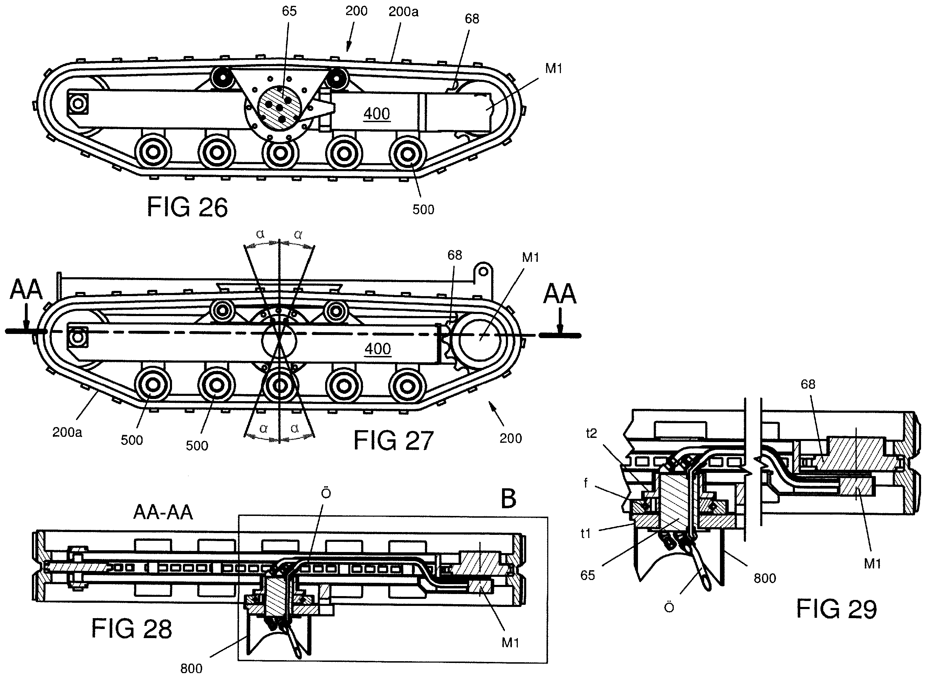

Each chain track set 200 comprises inside a loop formed of its chain track 200a a motor M1 moving the chain track 200a. So, the module system comprises four motors M1, one for each chain track set 200. The motors M1 are hydraulic or electric motors. Drive energy feed for the hydraulic hoses or electrical wires is as shown in Figure 28 or 13.

The frame 700 of the rearmost frame module A3 comprises on top of the frame 700 a load, such as a load unit 12 such as a fixed platform, tipping platform, interchangeable platform or a log frame of a log trailer. The load may also be an aggregate, work machine, or another transportable entity which comprises fastening point/points for the hook of the hook device or hooks of the cable device.

The frame module A1 comprises a bearing ring H to which the cabin 10 is placed in a turning fashion.

The frame 7000 of the frame module A1 is box-type and casing-like structure which receives the chain track sets 200 on its sides so that the roll. On its top surface, it has the bearing ring H of the cabin 10. The chain track sets 200 in question are supported by supports 300 which may be, as in the figures, axles between the frame 7000 and the chain track frame 400, comprising the bearing 900 for the rocking S1. It may be a sliding bearing or a bearing ring consisting of roller elements.

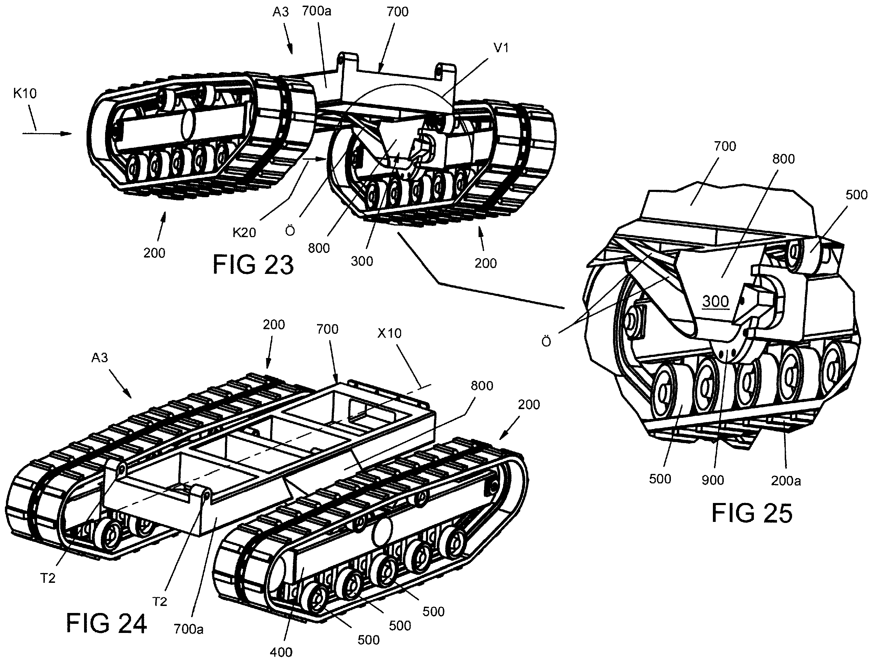

The support 300 may be a so-called downward beam 800, as in Figures 23, 24, and 25 by means of which the ground clearance of the machine is increased. The downward beam 800 is a hollow structure box beam. Through its hollow interior and centred on the bearing ring 900 are the hydraulic lines or hoses Ö taken to the motor M1, or electrical wires Ö taken to the motor M1 if the motor M1 is an electric motor. The motor M1 is a hydraulic motor or an electric motor.

The frame modules of the multi-purpose work machine are advantageously metal structures.

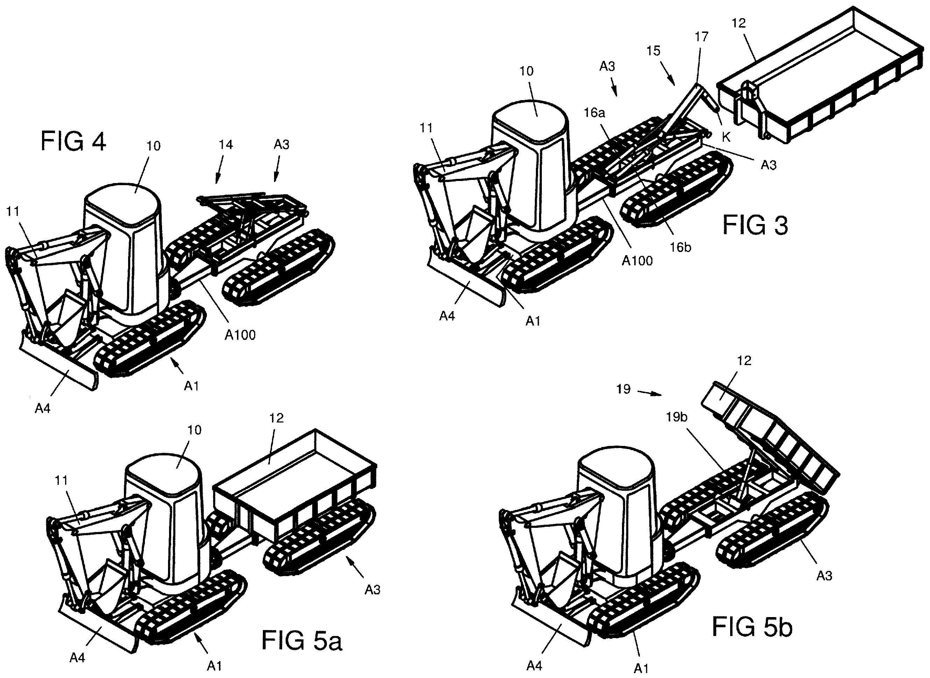

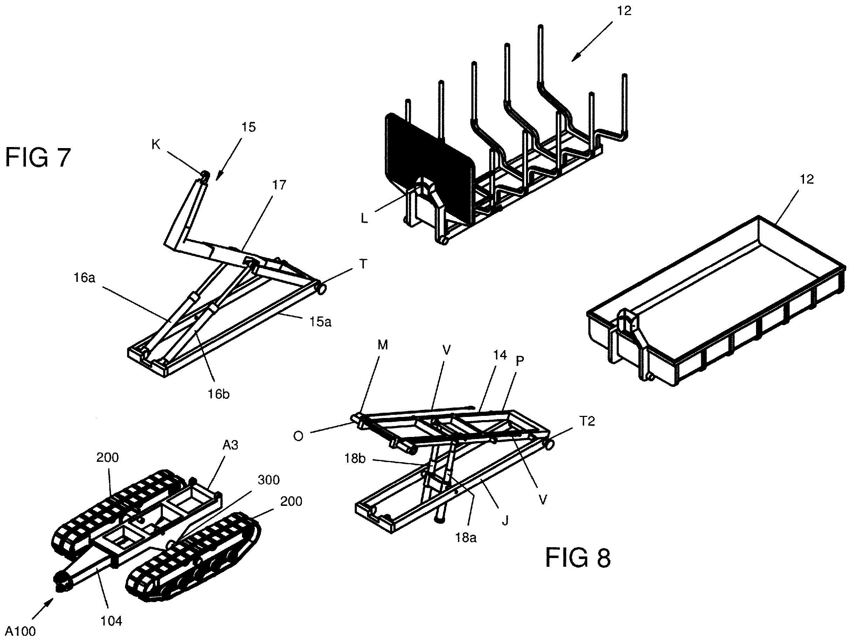

Figure 3 and 7 show an embodiment of the machine, in which the multi-purpose work machine comprises, as the load unit 12, an interchangeable platform which may be lifted on top of the frame A3 and lowered and left on the ground by a hook device 15. Hydraulic cylinders 16a and 16b turn the frame 17 of the hook device. The hook K of the device couples to a gripping bar on the platform and pulls the platform further onto the module A3..

Figures 4 and 8 show an embodiment in which an interchangeable platform acting as the load unit 12 is moved to tiltable rails P by a cable device 14 or a chain device. The rails P are pivoted at one end thereof to a cable interchangeable device frame J and tiltable by means of hydraulic cylinders 18b and 18b. At one end, the hydraulic cylinders are pivotally coupled to the frame J of the cable device, and at the other end to the rails P. The rails P are pivoted to turn on the bearings T2. The cables V may be reeled on wind-up rolls O by using a hydraulic or electric motor M. The hook at the other end of the cables V may be coupled to the load unit 12 such as a platform. The load such as the platform 12 may be lowered to the ground by using the cylinders to tilt the rails P, which act as a tilt frame. The platform 12 moves under gravity from the rails P. Figure 8 shows the cable device in a larger scale.

Figure 5a shows an embodiment where the load unit 12 is a platform that is fixedly on the frame module A3. Figure 5b shows the load unit provided with a tipping device 19. The cylinder 19b tilts the platform 12.

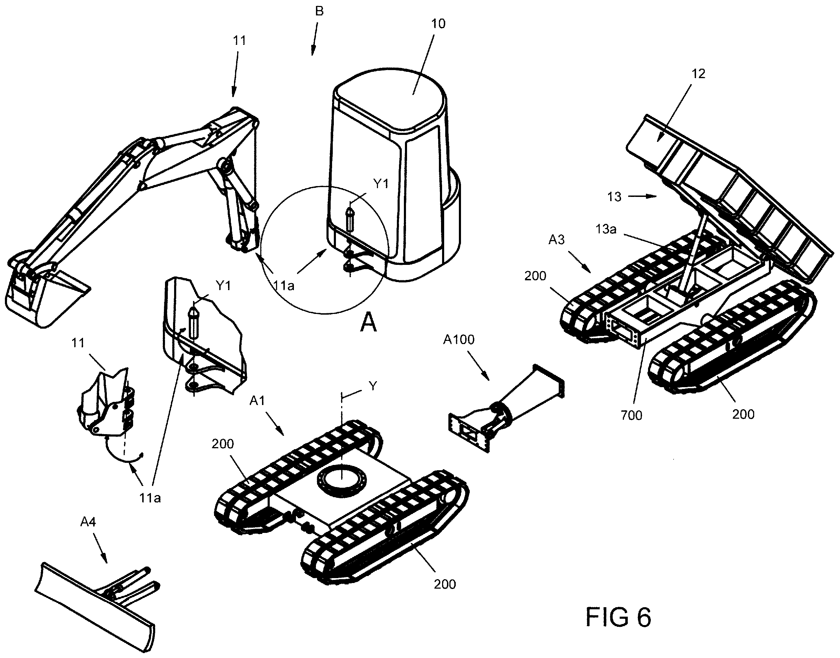

Figure 6 shows an embodiment of the multi-purpose work machine, in which the lower frame A of the vehicle, that is, the undercarriage, is formed of modules to be interconnected, advantageously of four frame modules A1, A100, A3 and a bulldozer blade module A4.

Figure 6 is an illustrative view of the module system of the invention. In accordance with the invention, the undercarriage A, so the lower frame, is formed of frame modules A1, A3, and A100 which are connected to each other by screw/flange joints D.The screws have been brought through perforations in the flanges of the module to be connected to the threaded holes of the second module to be connected. In addition, the bulldozer blade module A4 is connected as the front-most module.

Within the scope of the invention, an embodiment is also possible in which instead of screw/flange joints welding is used to connect the modules A1, A100, A3 to each other. In such a case, there is a welded joint between the modules A1, A100 and there is a welded joint between the modules A100, A3. The machine is of metal.

In the Figure, the frame module A1 a module which comprises a slewing ring H for the turning bearing of the cabin 10 to rotate the cabin 10 around the vertical axis Y by at least 360 degrees.. At the same time the boom structure 11 of the machine is rotated. The boom structure 11 is thus freely rotatable at a joint 11a in relation to the cabin 10 around the axis Y1. The pivot axis Y of the cabin and the pivot axis Y1 of the boom structure are parallel. A bucket 11e may be detachably hooked up to the boom structure 11.

The cabin 10 and the structures connected to it are referred to as the upper carriage B, or upper frame. The drive motor and hydraulic systems of the device are advantageously associated with the cabin 10 or the vicinity thereof.

The bulldozer blade module A4 is connected to the frame module A1. The rearmost frame module A3 comprises a load unit 12 such as a fixed platform or a tipping device 13 for the load unit 12.. The tipping device 13 comprises a hydraulic cylinder 13a.

In the embodiment, the frame A is equipped in accordance with the embodiment with a platform, so the module A3 is provided with provisions made for the platform 12, such as holes in the fastenings of the bearing lugs, openings for support lugs, and reinforcements for fastening. Thus, it is possible to use one module A3, also referred to as a load space module, for the different variations of the load units, such as an interchangeable platform, fixed platform, log trailer platform, hook interchangeable platform, device and cable interchangeable platform device which may detachably and optionally connected to it.

The frame module A3 is equipped according to the customer's order and needs.

Likewise, the other modules A1, A100, A4 to be connected are chosen and connected to each other according to what the desired multi-purpose work machine is to be like.

Figure 7 illustrates a hook device 15 installed on top of the frame module A3. The hook device 15 comprises a frame surrounding 15a. To one end thereof, the hydraulic cylinders 16a and 16n have been pivoted, and to the other end the turning frame 17 of the hook device. At their other end, the hydraulic cylinders are connected to the turning frame 17 of the hook device The turning frame 17 is pivoted to turn on bearings T. The gripping hook K of the hook device may be brought behind the gripping bar L in the load unit 12, whereby as the turning frame 17 is tilted, the load such as the load unit 12, a log trailer frame in the embodiment, is pulled on top of the module A1.

Figure 8 shows a second alternative outfit. In this embodiment, the frame module A3 is equipped with a cable device 14. Its operation is as described on the basis of Figure 4.

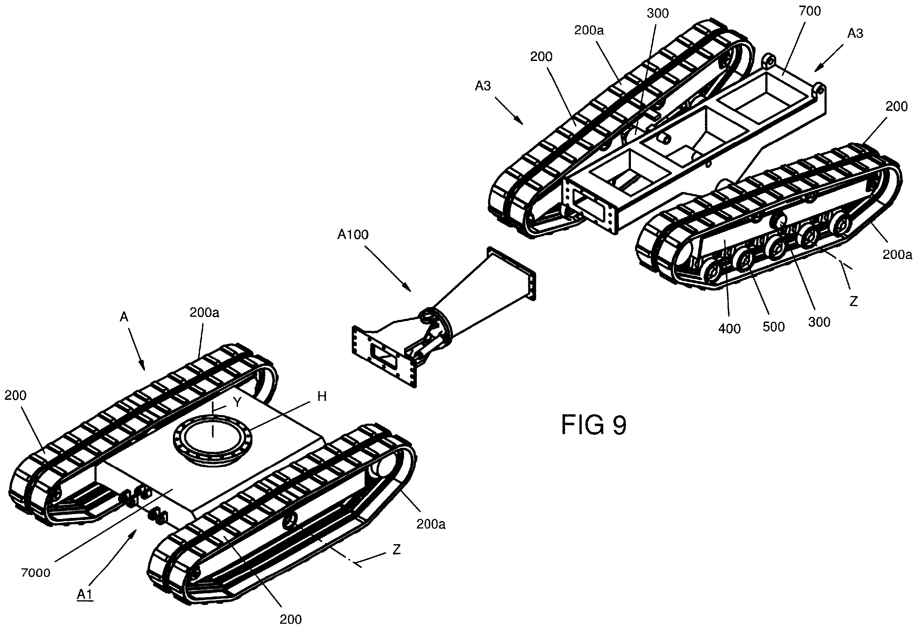

Figure 9 shows the main modules of the chain track device; load module A3, frame steering module A100, and cabin module A1.

The motor M1 moves the chain tracks 200a of each chain track set 200 forward and/or backward. Each chain track set 200 comprises inside the chain ring a dedicated hydraulic drive motor M1. The chain track sets 200 are identical in relation to each other, but mirror images. The chain frame 400 is in the middle and supports the chain tracks 200a and its idler wheels 500. The chain track sets 200 are pivoted to roll S1. Each track system is advantageously pivoted in the middle at the centre line Z to rotate around the horizontal axis Z and supported by the bearing 900 of the support 300. Therefore each chain track set 200 with its chain tracks 200a and frame 400 is rolling. A similar arrangement exists on both halves of the frame modules A1, A3, that is, on both sides. This ensures that the machine will move smoothly in a challenging terrain, too.

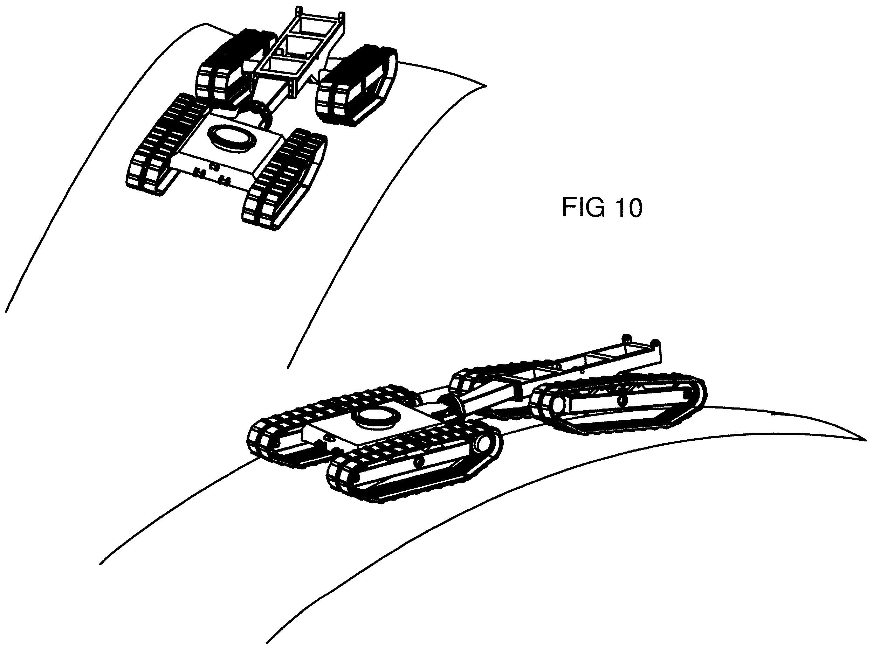

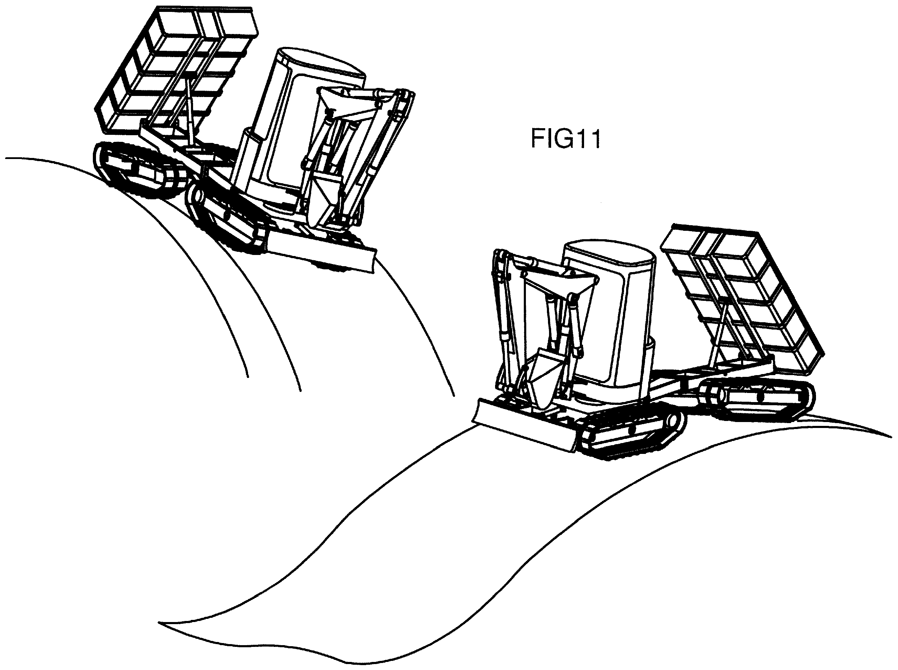

Figures 10 and 11 illustrated how the chain track device progresses in a terrain of different forms.

Figure 12 is a side view of the chain track set. The chain track set 200 comprises a chain track frame 400 of the chain track 200a inside the chain loop at the transverse centre line Z thereof a support 300, an axle in the embodiment, supported by which then entire chain track set 200 rolls. The axle 300 itself does not rotate, but acts as a support axle, and the outer surfaces of the end act as bearing surfaces either as sliding bearing surfaces or support surfaces for the rings of the bearing elements while the frame 400 of the chain track 200 itself rocks supported by them and thus by the bearing 900 they form. This causes the chain track set 200 to become rocking, and the rocking takes place around the transverse horizontal axis Z. The form of the chain track course is advantageous from the viewpoint of moving in the terrain. The chain track 200a comprises a lower horizontal run, the connected run obliquely upward, a curved run at the sheave, the connected upper horizontal run, then at a sheave a curved run, which is connected to an oblique downward run, connected to the lower horizontal run. Due to the oblique track runs, the machine may be made to cross terrain obstacles easily. There is at least one oblique track run at the front of the device, advantageously there are two runs at the front and back of the chain track frame.

Figure 13 is a cross section A-A of Figure 12. As shown in the figure, the support 300 of the frame 700 of the chain track set 200 is an axle which in the embodiment comprises on its surface a sliding bearing 900 which makes the rocking (arrow S1) of the chain track set 200 possible. The supports 300 may also be a beam 800 running downward to increase the ground clearance of the machine. Such an embodiment of the support 300, so the downward beam 800, is disclosed in the latter embodiments. The axle 300 comprises channels Ö for leak oil, backward pressure oil, forward pressure oil, braking oil, or the channels Ö, such as passages for electrical wires if the motor M1 is an electric motor.

The oils are led from the end and sides of the axle 300 through pipes/hoses to the motor M1, which is connected to the drive shaft of the end drive wheel at the end of the frame 400 of the chain track set. The channel runs at the end of the axle 300 are denoted with the letter Ö. The motor M1 may be an electric motor or a hydraulic motor. One of the end wheels to the chain track is spring-loaded to remove slack from the chain, caused by wear, for example.

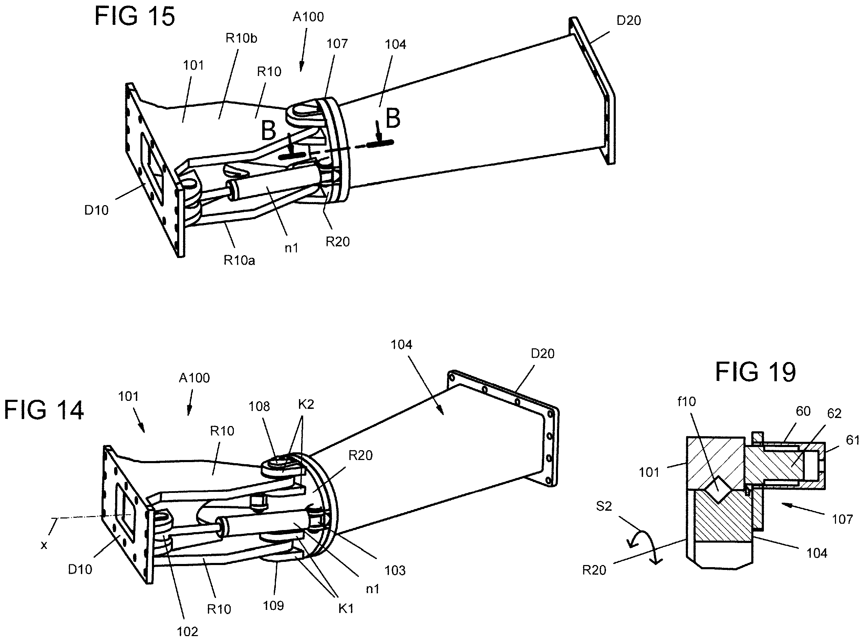

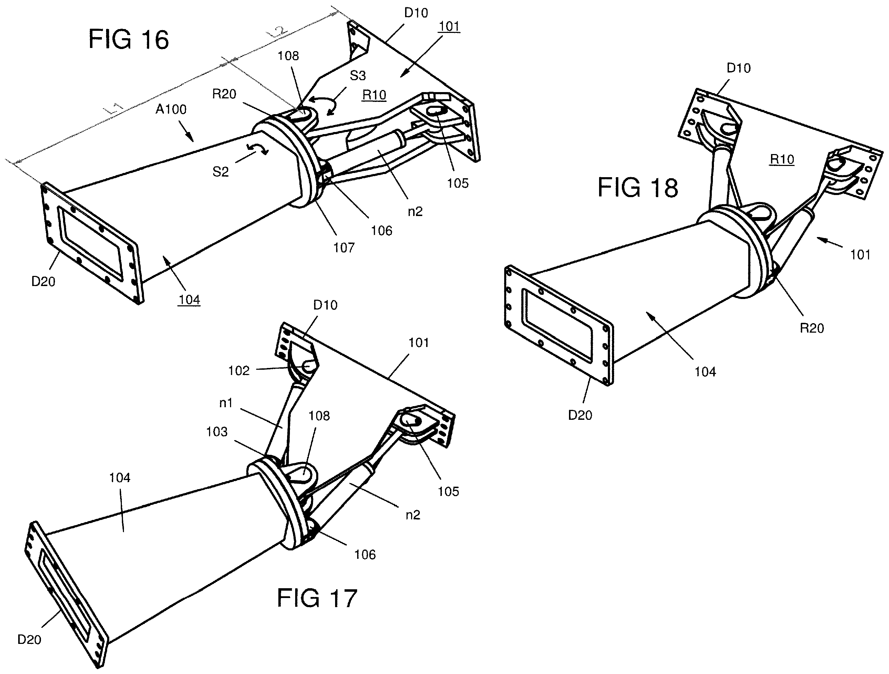

Figures 14 to 18 show the frame steering module A100 axonometrically.

Figures 14 to 18 show a so-called frame steering module A100. In the module half 101, it comprises a joint 102 for the cylinder n1, connected to a moving frame part R10, and a joint 103 at the other end of the cylinder n1, connected to a round frame plate R10 of the frame half 101. The frame part R10 is pivoted to turn at the joint 107 in relation to the frame R20. The frame part R10 of the half 101 comprises plate-like frame parts R10a and R10b which connect to a connecting flange D10. A placement and moving space is formed for the cylinders n1 and n2 between the plate parts R10a and R10b.

Correspondingly, the cylinder n2 comprises a joint 105 in the module half 101 on its turning frame part R10, and a joint 106 at the other end of the cylinder, connected to the round frame plate R20 of the half on the other side of the centre line X. The cylinders n1 and n2 are advantageously hydraulic cylinders. They are thus used to turn the turning frame part R10 of the half 101 and thus the frame halves 101, 104 in relation to each other. Arrow S3. Joint axles 108,109 for the rotation S3 pass through the openings in the lugs K1, K2 and the holes in the frame parts R10. The lugs K1, K2 are welded to the round plate R20. The machine is of metal.

The frame part R10 with the structures connected to it are adapted to rotate on the joint 108 in relation to the frame part R20.

The frame part R20 of the half 101 is a round plate, which acts as the base frame part and is, together with the devices connected to it, adapted to rotate by means of a slewing ring bearing 107 in relation to the other frame part 104. The turning ring bearing 107 is thus between the halves 101 and 104.

The half 104 is along its length L1 substantially longer than the half 101 along its length L2.

This enables the module parts of the vehicle to turn in relation to each other.

The half 101 advantageously connects to the frame module comprising the cabin, and the half 104 advantageously connects to the module comprising a platform or similar. The modules comprising the cabin 10 is turned by means of the cylinders n1 and n2 and thus the movable machine.

The halves 101 and 104 connect to each other at swivel 107 which may comprise bearing elements f10 such as rolls or cone bearing parts or bearing rolls on a ring The swivel 107 allows the halves 101 and 104 to rotate (arrow S2) in relation to each other. The frame plate R10 of the half 101, with the parts connected thereto, are adapted to turn (arrow S2) in relation to the frame half 104 at the swivel bearing 107. The halves 101 and 104 may be locked in relation to each other by the hydraulic cylinder or a brake piston 62 of a brake 60, whereby the frame steering module A100 may be secured at its joints for the duration of loading/working.

One frame half 101 comprises fastening means D10 and the other frame half 104 comprises fastening means D20. With the fastening means D10 and D20, the module A100 may be detachably mounted to the different modules of the multi-purpose work machine advantageously so that the half 101 is connected to the cabin and control cabin module, and the conically narrowing half 104 is connected by its flange D20 to the module A3 comprising the load unit.

The fastening means D10 and D20 are in the embodiments of the figures formed of perforated flanges and screws and nuts, or only of screws and flanges as well as screws holes of the flanges. The inventive machine moving on chain tracks is most advantageously a multi-purpose work machine moving on chain tracks. In addition to a flange/screw joint, the modules may be connected to each other by welding. The machine is of metal.

Figure 19 shows a cross-section B-B of Figure 15, The frame part R20 rotates (arrow S) with the connected frame parts R10 and cylinders n1 and n2 in relation to the other frame half 104, enabled by the turning ring bearing 107. This way, the load being drawn may rotate in relation to the towing part in the terrain. The machine can be made to move in a difficult terrain, too. The machine is well suited to a multi-purpose machine moved on chain tracks.

The frame steering module A100 may be mounted to the frame modules A1, A3 directly with a welded joint, instead of the detachable flange joint.

The round base frame part R20 of the half 101 is fitted with bearings to rotate with the structural parts R10, n1, n2 on the ring bearing 107 in relation to the frame half 104. The frame halves 101, 104 may be locked in the figure to not rotate in relation to each other by a locking device, that is, brake 60, which as shown in the figure is a cylinder comprising a locking/braking piston 62. In such a case, the frame steering module A100 may be locked/secured for the duration of loading by having the cylinders n1 and n2 locked and by locking the brake 60 by bringing oil pressure to the piston 62 of the brake 60 through the channel 61, which locks the ring bearing 107. The piston 62 is in the locking pressed against the surfaces of the frame half 101. The brake 60 is fixed to the frame half 104 by its cylinder frame.

The frame half 104 widens conically towards its end comprising the connecting flange D20.

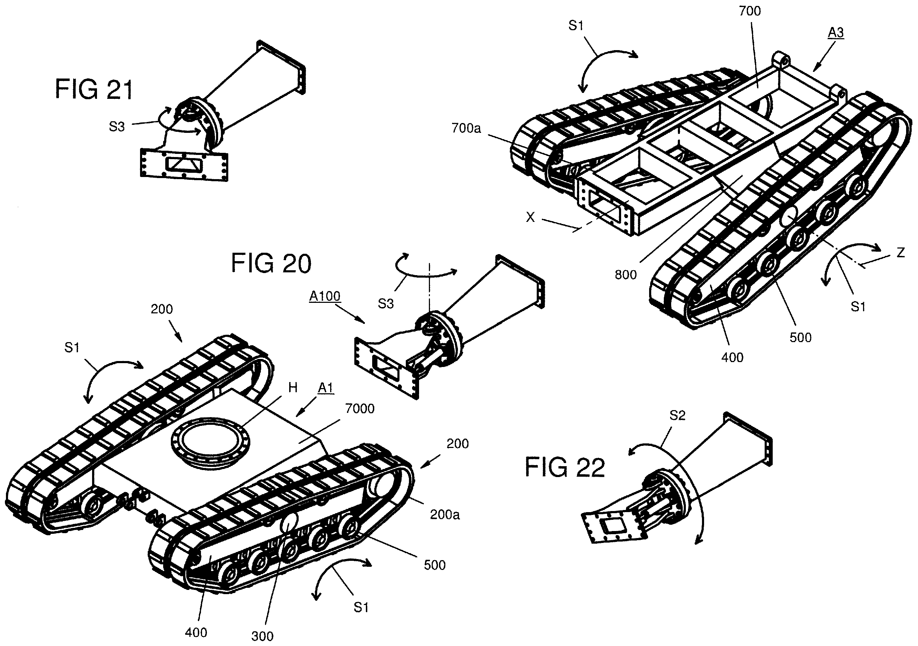

Figure 20 shows axonometrically the first frame module A1, frame steering module A100, and the rearmost frame module A3 comprising a load space 12.

Figures 21 and 22 show different rotation positions of the frame steering module A100.

Figures 23 and 24 show the chain track set 200 and the lower carriage A in an embodiment in which there is a support 300 of the chain track 200, running downward from the horizontal frame beam 700a of the machine frame 700, in the embodiment a downward beam 800, to increase the ground clearance of the machine. Within the hollow beam 800 in question, electrical wires or hydraulic lines or hydraulic hoses or hydraulic pipes have been brought for the motor M1 moving the chain track. The motor M1 is thus a hydraulic motor or an electric motor.

Figure 25 shows the circled area V1 of Figure 23. At its end, the downward beam 800 comprises a bearing 900 for the roll (arrow S1) of the chain track set 200.

In Figure 26, the chain track set 200 is shown from the direction of the arrow K20 of Figure 23, and in Figure 27 from the direction of the arrow K10 of Figure 23. Figure 28 is a cross section AA-AA of Figure 27.

The downward beam 800 comprises at its end a bearing 900, one bearing half t1 of which connects to the downward beam 800 to its lower side end, and the other bearing half t2 is connected to the frame 400 of the chain track set 200, and the bearing 900 in question comprises on a circle ring between the bearing halves t1 and t2 the roller elements f of the bearing 900.

Figure 29 shows the area B of Figure 28.

In the middle of the bearing, there is a non-rotating connection sleeve, a so-called through-bushing 65 provided with play, advantageously a sliding fit, to which the electric wires or hydraulic hoses or pipes to the motor M1 are received. They exit the bushing 65 and are brought in to the bushing 65. They connect to the motor M1, which is an electric or hydraulic motor and drives the sprocket wheel 68 on its axle. At the same time, it acts and the sheave of the chain track ring 200a and connects to the spoke parts of the chain track ring 200a, moving the chain track 200a in the clockwise or anticlockwise direction and thus the machine forwards or backwards.

The chain track 200a is directed as a loop through idler wheels 500, which are fastened to the chain track frame 400. One of the sheaves of the loop is the sprocket wheel 68 of the chain track 200a, driven by the motor M1, and the other one is a spring-loaded sheave.

Within the scope of the invention, an embodiment of the invention is also possible in which only the frame module A1 is provided by the motor M1 in the chain track sets 200 and in which the frame module A3 connected to it in a frame steered manner comprises the rocking chain track sets 200, only, without the drive motor M1. In other respects, the structure A3 of the frame module A3 in question is the same as the frame module A3 equipped with the motor M1 and shown in the drawings.

A person skilled in the art will find it obvious that, as technology advances, the basic idea of the invention may be implemented in many different ways. The invention and its embodiments are thus not restricted to the above-described examples but may vary within the scope of the claims.

## Claims

1. A multi-purpose work machine moving on chain tracks (200a),
wherein
the machine comprises an upper carriage (B) and below it an undercarriage (A), which comprises frame modules (A1, A100, A3) which are interconnected and of which the first frame module (A1) comprises a bearing ring (H) for a cabin (10) of the upper carriage (B), whereby the cabin (10) together with a boom (11) may be freely turned, the cabin structure (10) comprising the boom (11) rotating with it, to which a tool such as a bucket may be hooked up,
a second frame module (A3) has been pivotally connected to the first frame module (A1), and between the modules (A1, A3) there are cylinders (n1, n2) by means of which the frame steering of the machine takes place,
the first frame module (A1) comprises on both its sides chain track sets (200), both of which are supported by their supports (300) and pivoted to rock (arrow S1) around the transverse axis (z) by means of a bearing (900) on the support (300), whereby the machine moves smoothly in a varying terrain,
and the second frame module (A3) comprises a frame (700) and in it longitudinal frame beams (700a) and chain track sets (200) on both sides of the frame (700), which are pivoted to rock (arrow S1) supported by their supports (300) and bearings (900) on the support (300) around the transverse Z axis, and that for both chain track sets (200) of at least the first frame module (A1) there is a drive motor (M1) to move its chain track (200a), **characterised in that**
the frame (700) of the second frame module (A3) comprises on top of ta load unit (12) which is an interchangeable platform.

2. A machine as claimed in claim 1,
**characterised in that** the second frame module (A3) comprises on top of the frame beams of the frame (700) a hook device (15) which by its frame (15a) is connected to them, which comprises a hydraulic cylinder/cylinders (16a, 16b) and a frame (17) of the hook device, which is pivoted by a bearing (T) at an end of the frame to turn turned by the hydraulic cylinder (16a, 16b), whereby a hook (K) at the other end of the frame (17) is connectable to a gripping bar (L) on the interchangeable platform, whereby the interchangeable platform, may be lifted by the hook device (15) and lowered on top of the frame (700) of the second frame module (A3) and from on top of it to the ground.

3. A machine as claimed in claim 1,
**characterised in that**, on top of frame beams (700a) of the frame of the second frame module (A3), a cable device (14) has been mounted, which comprises tiltable rails (P) that at one end comprise a bearing/bearings, supported by which the rails (P) may be tilted, and **in that** between the frame (J) of the cable device (14) and the rails (P) there is a hydraulic cylinder/cylinders (18a, 18b) which pivotally connect to the frame (J) of the cable device and at the other end pivotally to the rails (P) and **in that** there are cables that may be reeled by a motor (M1) to wind-up rolls (O), and the other end of the cable is connectable to an interchangeable platform whereby when the rails (P) have been tilted by the cylinder device (18a, 18b) a load such as the interchangeable platform may be lifted by using the motor (M1) onto the rails and by way of gravity the interchangeable platform may be lowered to the ground by tilting the rails (P).

4. A machine as claimed in any one of the preceding claims,
**characterised in that**
the bearing (900) for the rocking of the chain track set (200) is formed on the upper surface of the support (300) as a sliding bearing or a bearing ring comprising roller elements (f).

5. A machine as claimed in any one of the preceding claims,
**characterised in that** between the first frame module (A1) and the second frame module (A3) there is a third frame module (A100) which has cylinders (n1, n2) by means of which the frame steering of the machine takes place and which is connected end-to-end to the first and second frame module (A1, A3) connected to it.

6. A machine as claimed in claim 5,
**characterised in that** the third frame module (A100) comprises connection means (D10, D20) at both ends of the module to connect the module (A100) detachably to the frame parts of the multi-purpose work machine, and **in that** the frame-steering module (A100) is formed of two frame halves (101, 104) which are pivoted to each other, and **in that** the frame halves comprise between them a swivel (107) whereby the frame halves (101, 104) may rotate in relation to each other, and **in that** the first cylinder (n1) is at its end pivotally connected to the first half (101) to its turning frame part (R10) and **in that** at its second end the cylinder is pivotally connected to the frame part (R20) and likewise the second cylinder (n2) is pivotally connected to the first half (101) to its turning frame part (R10) and at its second end pivotally to the frame part (R20) and **in that** the first (D10) of the connecting means are located in the first half (101) and the second connecting means (D20) in the second half (104) of the module (A100).

7. A machine as claimed in claim 6,
**characterised in that** the first frame part (101) comprises a base frame part (R20) and, turnably connected to it, a movable frame part (R10) which comprises a connecting flange (D10) and there is a turning joint (108) between the frame parts (R10 and R20) and that the rotating turn of the movable frame part (R10) is performed with cylinders (n1, n2) and that the base frame part (R20) with the structures connected thereto are rotatable in relation to the second half (104) supported by the bearing (107), and **in that** the second half (104) is connectable to the load module (A3) and **in that** the first half (101) is connected to the module comprising the cabin (10).

8. A machine as claimed in claim 6 or 7,
**characterised in that** the swivel (107) is formed of bearing rolls on a ring, or bearing balls, or cone bearings.

9. A machine as claimed in any one of claims 6, 7 or 8,
**characterised in that** the swivel (107) may be locked for the duration of loading by a brake (60), which prevents the rotation of the halves (101, 104) in relation to each other for the duration of being locked by the brake (60), making the machine stable during its loading.

10. A machine as claimed in any one of the preceding claims,
**characterised in that** the frame modules (A1, A100, A3) are interconnected by welding or by flange joints which are implemented by the use of bolts and/or screws or similar.

11. A machine as claimed in any one of the preceding claims,
**characterised in that** the first frame module (A1) comprises on its centre region a bearing ring (H) for the cabin (10), and connecting flanges (D) at both ends.

12. A machine as claimed in any one of the preceding claims,
**characterised in that** the boom (11) is a boom comprising a bucket.

13. A machine as claimed in any one of the preceding claims 1 to 11,
**characterised in that** the boom (11) comprises a grab or similar for handling items and soil.

14. A machine as claimed in any one of the preceding claims,
**characterised in that** as the front module (A4) of the undercarriage (A) there is a module comprising a bulldozer blade.

15. A machine as claimed in any one of the preceding claims,
**characterised in that** the frame (400) of the chain track set (200) is longitudinal and rigid and comprises at both ends sheaves for the chain track (200a) and **in that** the chain track set (200) comprises a support (300), whereby the chain track set (200) turns supported by it around the horizontal geometrical axis Z, and **in that** the chain track (200a) is driven forward and backward by the drive motor (M1).

16. A machine as claimed in any one of the preceding claims,
**characterised in that** the support (300) comprises oil channels (Ö) or passages for electrical wires to lead hydraulic oil or electrical wires to the motor (M1), which is a hydraulic motor or an electric motor.

17. A machine as claimed in any one of the preceding claims,
**characterised in that** the machine is remote-controlled and comprises remote control means for the remote control, such as a camera or cameras, and that the camera/cameras are advantageously 3D cameras to form a three-dimensional image for the purpose of steering the machine and carrying out tasks in a remote-controlled fashion, and that the remote control means are at least partly located in the cabin (10) of the machine.

18. A machine as claimed in any one of the preceding claims,
**characterised in that** chain tracks (200a) on the same frame may be controlled at different speeds in relation to each other and/or to different directions simultaneously to change the direction of travel of the machine.

19. A machine as claimed in any one of the preceding claims,
**characterised in that** the chain track (200a) comprises at least one advantageously two chain track runs running obliquely in relation to the horizontal runs, at the ends of the chain track set frame (400).

20. A machine as claimed in any one of the preceding claims,
**characterised in that** the machine comprises a beam part, that is, a downward beam (800), going downward from the frame beam (700, 7000) of the frame module (A1, A3) of the undercarriage (A) of the machine, to increase the ground clearance of the machine and which constitutes the support (300) for the chain track set (200).

21. A machine as claimed in any one of the preceding claims,
**characterised in that** the chain track set (200) comprises such a support (300) that is has a bearing (900) and roller elements (f) on its bearing ring, whereby one bearing half (t1) connects to the support (300) and the other bearing half (r2) connects to the frame (700) of the chain track set (200), whereby the roller elements (f) are between the bearing halves (t1 and t2), allowing the chain track set to rock (arrow S1).

22. A machine as claimed in any one of the preceding claims,
**characterised in that** the hydraulic or electrical lines (Ö) of the motor (M1) moving the chain track are brought in at the middle of the bearing (900) and connected to the motor (M1) which drives its sprocket wheel (68) and moves the chain track and machine.

23. A machine as claimed in any one of the preceding claims,
**characterised in that** in the middle of the bearing (900) there is a non-rotating through-bushing (65) to which the wires (Ö) are connected, and **in that** the wires (Ö) have first been led from inside the hollow downward beam (800) to the through-bushing (65) and from it to the motor (M1) moving the chain track (200a) and machine.

24. A machine as claimed in any one of the preceding claims,
**characterised in that** the motor (M1) resides inside the chain track loop of the chain track (200a) at one end of the frame (400) of the chain track set (200), and is a hydraulic motor or an electric motor.

25. A machine as claimed in any one of the preceding claims,
**characterised in that** the frame modules (Aa1, A3) pivotally connected together comprise drive motors (M1) on all of their chain track sets (200).

26. A machine as claimed in any one of the preceding claims,
**characterised in that** the boom (11) also comprises a joint, on which it turns also in relation to the cabin (10) around the vertical axis (Y1).

## Patentansprüche

1. Mehrzweckarbeitsmaschine, die sich auf Raupenketten (200a) bewegt,
wobei
die Maschine einen Oberwagen (B) und unter diesem einen Unterwagen (A) umfasst, der Rahmenmodule (A1, A100, A3) umfasst, die verkoppelt sind und von denen das erste Rahmenmodul (A1) einen Lagerring (H) für eine Kabine (10) des Oberwagens (B) umfasst, wodurch die Kabine (10) zusammen mit einem Ausleger (11) frei gedreht werden kann, wobei die Kabinenstruktur (10) den Ausleger (11), der sich mit ihr dreht und an dem ein Werkzeug wie etwa eine Schaufel eingehängt werden kann, umfasst,
ein zweites Rahmenmodul (A3) mit dem ersten Rahmenmodul (A1) schwenkbar verbunden wurde und sich zwischen den Modulen (A1, A3) Zylinder (n1, n2) befinden, mittels derer die Rahmenlenkung der Maschine erfolgt,
das erste Rahmenmodul (A1) auf beiden seiner Seiten Raupenkettensätze (200) umfasst, von denen beide durch deren Stützen (300) gestützt und geschwenkt werden, um mittels eines Lagers (900) am Träger (300) um die Querachse (z) zu schwingen (Pfeil S1), wodurch sich die Maschine in einem variierenden Gelände gleichmäßig bewegt,
und das zweite Rahmenmodul (A3) einen Rahmen (700) und darin Längsrahmenträger (700a) und Raupenkettensätze (200) auf beiden Seiten des Rahmens (700) umfasst, die geschwenkt werden, um, gestützt durch deren Stützen (300) und Lager (900) an der Stütze (300), um die Querachse Z zu schwingen (Pfeil S1), und dass für beide Raupenkettensätze (200) mindestens des ersten Rahmenmoduls (A1) ein Antriebsmotor (M1) vorhanden ist, um dessen Raupenkette (200a) zu bewegen, **dadurch gekennzeichnet, dass** der Rahmen (700) des zweiten Rahmenmoduls (A3) darauf eine Lasteinheit (12) umfasst, die eine austauschbare Plattform ist.

2. Maschine nach Anspruch 1,
**dadurch gekennzeichnet, dass** das zweite Rahmenmodul (A3) auf den Rahmenträgern des Rahmens (700) eine Hakenvorrichtung (15) umfasst, die mittels ihres Rahmens (15a) mit ihnen verbunden ist und die einen oder mehrere Hydraulikzylinder (16a, 16b) und einen Rahmen (17) der Hakenvorrichtung umfasst, die von einem Lager (T) an einem Ende des Rahmens geschwenkt wird, um durch die Hydraulikzylinder (16a, 16b) zu gedreht werden, wodurch ein Haken (K) am anderen Ende des Rahmens (17) mit einer Greifstange (L) an der austauschbaren Plattform verbindbar ist, wodurch die austauschbare Plattform mit der Hakenvorrichtung (15) angehoben und auf den Rahmen (700) des zweiten Rahmenmoduls (A3) sowie von darauf zum Boden abgesenkt werden kann.

3. Maschine nach Anspruch 1,
**dadurch gekennzeichnet, dass** auf den Rahmenträgern (700a) des Rahmens des zweiten Rahmenmoduls (A3) eine Seilvorrichtung (14) montiert wurde, die neigbare Schienen (P) umfasst, die an einem Ende ein oder mehrere Lager umfassen, auf die gestützt die Schienen (P) geneigt werden können, und dadurch, dass zwischen dem Rahmen (J) der Seilvorrichtung (14) und den Schienen (P) ein oder mehrere Hydraulikzylinder (18a, 18b) vorhanden sind, die schwenkbar mit dem Rahmen (J) der Seilvorrichtung und am anderen Ende schwenkbar mit den Schienen (P) verbunden sind, und dadurch, dass Seile vorhanden sind, die von einem Motor (M1) auf Aufwickelrollen (O) gewickelt werden können, und das andere Ende des Seils mit einer austauschbaren Plattform verbindbar ist, wodurch, wenn die Schienen (P) von den Zylindervorrichtungen (18a, 18b) geneigt wurden, eine Last, wie etwa die austauschbare Plattform, unter Verwendung des Motors (M1) auf die Schienen gehoben und durch Schwerkraft die austauschbare Plattform durch Neigen der Schienen (P) auf den Boden abgesenkt werden kann.

4. Maschine nach einem der vorhergehenden Ansprüche,
**dadurch gekennzeichnet, dass**
das Lager (900) für das Schwingen des Raupenkettensatzes (200) auf der Oberfläche der Stütze (300) als ein Gleitlager oder ein Lagerring, der Rollenelemente (f) umfasst, gebildet ist.

5. Maschine nach einem der vorhergehenden Ansprüche,
**dadurch gekennzeichnet, dass**
sich zwischen dem ersten Rahmenmodul (A1) und dem zweiten Rahmenmodul (A3) ein drittes Rahmenmodul (A100) befindet, das Zylinder (n1, n2) aufweist, mittels derer die Rahmenlenkung der Maschine erfolgt und die Ende-zu-Ende mit dem ersten und dem zweiten Rahmenmodul (A1, A3), die damit verbunden sind, verbunden ist.

6. Maschine nach Anspruch 5,
**dadurch gekennzeichnet, dass** das dritte Rahmenmodul (A100) an beiden Enden des Moduls Verbindungsmittel (D10, D20) zum lösbaren Verbinden des Moduls (A100) mit den Rahmenteilen der Mehrzweckarbeitsmaschine umfasst, und dadurch, dass das Rahmenlenkmodul (A100) aus zwei Hälften (101, 104) gebildet ist, die zueinander geschwenkt sind, und dadurch, dass die Rahmenhälften zwischen sich ein Drehlager (107) umfassen, wodurch sich die Rahmenhälften (101, 104) mit Bezug aufeinander drehen können, und dadurch, dass der erste Zylinder (n1) an seinem Ende schwenkbar mit der ersten Hälfte (101) an ihrem drehenden Rahmenteil (R10) verbunden ist, und dadurch, dass der Zylinder an seinem zweiten Ende schwenkbar mit dem Rahmenteil (R20) verbunden ist und ebenso der zweite Zylinder (n2) schwenkbar mit der ersten Hälfte (101) an ihrem drehenden Rahmenteil (R10) verbunden ist und an seinem zweiten Ende schwenkbar mit dem Rahmenteil (R20) verbunden ist, und dadurch dass sich das erste (D10) der Verbindungsmittel in der ersten Hälfte (101) und sich das zweite Verbindungsmittel (D20) in der zweiten Hälfte (104) des Moduls (A100) befindet.

7. Maschine nach Anspruch 6,
**dadurch gekennzeichnet, dass** das erste Rahmenteil (101) ein Grundrahmenteil (R20) und, drehbar damit verbunden, ein bewegbares Rahmenteil (R10), das einen Verbindungsflansch (D10) umfasst, umfasst und es zwischen den Rahmenteilen (R10 und R20) ein Drehgelenk (108) gibt und dass die Drehung des bewegbaren Rahmenteils (R10) mit Zylindern (n1, n2) durchgeführt wird und dass das Grundrahmenteil (R20) mit den damit verbundenen Strukturen mit Bezug auf die zweite Hälfte (104), gestützt vom Lager (107), drehbar ist, und dadurch dass die zweite Hälfte (104) mit dem Lastmodul (A3) verbindbar ist, und dadurch, dass die erste Hälfte (101) mit dem Modul, das die Kabine (10) umfasst, verbunden ist.

8. Maschine nach Anspruch 6 oder 7,
**dadurch gekennzeichnet, dass** das Drehlager (107) aus Lagerrollen auf einem Ring oder Lagerkugeln oder Kegellagern gebildet ist.

9. Maschine nach Anspruch 6, 7 oder 8,
**dadurch gekennzeichnet, dass** das Drehlager (107) während des Beladens mittels einer Bremse (60) verriegelt werden kann, wodurch die Drehung der Hälften (101, 104) mit Bezug aufeinander für die Dauer der Verriegelung durch die Bremse (60) verhindert wird, weshalb die Maschine während ihres Beladens stabil ist.

10. Maschine nach einem der vorhergehenden Ansprüche,
**dadurch gekennzeichnet, dass** die Rahmenmodule (A1, A100, A3) mittels Schweißung oder mittels Flanschgelenken, die unter Verwendung von Bolzen und/oder Schrauben oder Ähnlichem implementiert werden, verkoppelt sind.

11. Maschine nach einem der vorhergehenden Ansprüche,
**dadurch gekennzeichnet, dass** das erste Rahmenmodul (A1) in seinem mittleren Bereich einen Lagerring (H) für die Kabine (10) sowie Verbindungsflansche (D) an beiden Enden umfasst.

12. Maschine nach einem der vorhergehenden Ansprüche,
**dadurch gekennzeichnet, dass** der Ausleger (11) ein Ausleger ist, der eine Schaufel umfasst.

13. Maschine nach einem der vorhergehenden Ansprüche 1 bis 11,
**dadurch gekennzeichnet, dass** der Ausleger (11) einen Greifer oder Ähnliches zum Handhaben von Gegenständen und Erde umfasst.

14. Maschine nach einem der vorhergehenden Ansprüche,
**dadurch gekennzeichnet, dass** als das vordere Modul (A4) des Unterwagens (A) ein Modul vorhanden ist, das ein Planierraupenschild umfasst.

15. Maschine nach einem der vorhergehenden Ansprüche,
**dadurch gekennzeichnet, dass** der Rahmen (400) des Raupenkettensatzes (200) länglich und steif ist und an beiden Enden Laufrollen für die Raupenkette (200a) umfasst, und dadurch dass der Raupenkettensatz (200) eine Stütze (300) umfasst, wodurch sich der Raupenkettensatz (200), gestützt von ihm, um die horizontale geometrische Achse Z dreht, und dadurch, dass die Raupenkette (200a) vorwärts und rückwärts vom Antriebsmotor (M1) angetrieben wird.

16. Maschine nach einem der vorhergehenden Ansprüche,
**dadurch gekennzeichnet, dass** die Stütze (300) Ölkanäle (Ö) oder Durchführungen für elektrische Drähte zum Führen von Hydrauliköl oder elektrischen Drähten zum Motor (M1), der ein Hydraulikmotor oder ein Elektromotor ist, umfasst.

17. Maschine nach einem der vorhergehenden Ansprüche,
**dadurch gekennzeichnet, dass** die Maschine ferngesteuert ist und Fernsteuermittel für die Fernsteuerung, wie etwa eine Kamera oder Kameras, umfasst und dass die Kamera/Kameras vorteilhafterweise 3D-Kameras sind, um zum Zweck des Lenkens der Maschine und Ausführens von Aufgaben auf ferngesteuerte Weise ein dreidimensionales Bild zu bilden, und dass sich die Fernsteuermittel mindestens teilweise in der Kabine (10) der Maschine befinden.

18. Maschine nach einem der vorhergehenden Ansprüche,
**dadurch gekennzeichnet, dass** Raupenketten (200a) am selben Rahmen gleichzeitig mit verschiedenen Geschwindigkeiten mit Bezug aufeinander und/oder in verschiedene Richtungen, um die Fahrtrichtung der Maschine zu ändern, gesteuert werden können.

19. Maschine nach einem der vorhergehenden Ansprüche,
**dadurch gekennzeichnet, dass** die Raupenkette (200a) mindestens einen, vorteilhafterweise zwei Raupenkettendurchläufe, die mit Bezug auf die horizontalen Durchläufe schräg verlaufen, an den Enden des Raupenkettensatzrahmens (400) umfasst.

20. Maschine nach einem der vorhergehenden Ansprüche,
**dadurch gekennzeichnet, dass** die Maschine ein Trägerteil, d. h. einen Abwärtsträger (800), der vom Rahmenträger (700, 7000) des Rahmenmoduls (A1, A3) des Unterwagens (A) der Maschine nach unten geht, um die Bodenfreiheit der Maschine zu erhöhen, und der die Stütze (300) für den Raupenkettensatz (200) konstituiert, umfasst.

21. Maschine nach einem der vorhergehenden Ansprüche,
**dadurch gekennzeichnet, dass** der Raupenkettensatz (200) eine derartige Stütze (300) umfasst, die ein Lager (900) und Rollenelemente (f) auf ihrem Lagerring hat, wodurch eine Lagerhälfte (t1) mit der Stütze (300) verbunden ist und die andere Lagerhälfte (t2) mit dem Rahmen (700) des Raupenkettensatzes (200) verbunden ist, wodurch sich die Rollenelemente (f) zwischen den Lagerhälften (t1 und t2) befinden, um das Schwingen (Pfeil S1) des Raupenkettensatzes zu erlauben.

22. Maschine nach einem der vorhergehenden Ansprüche,
**dadurch gekennzeichnet, dass** die Hydraulik- oder Elektroleitungen (Ö) des Motors (M1), der die Raupenkette bewegt, in der Mitte des Lagers (900) eingeführt und mit dem Motor (M1), der ihr Kettenrad (68) antreibt und die Raupenkette und die Maschine bewegt, verbunden sind.

23. Maschine nach einem der vorhergehenden Ansprüche,
**dadurch gekennzeichnet, dass** sich in der Mitte des Lagers (900) eine sich nicht drehende Durchgangsbuchse (65) befindet, mit der die Drähte (Ö) verbunden sind, und dadurch, dass die Drähte (Ö) zuerst von der Innenseite des hohlen Abwärtsträgers (800) zur Durchgangsbuchse (65) und von dort zum Motor (M1), der die Raupenkette (200a) und die Maschine bewegt, geführt wurden.

24. Maschine nach einem der vorhergehenden Ansprüche,
**dadurch gekennzeichnet, dass** sich der Motor (M1) in der Raupenkettenschleife der Raupenkette (200a) an einem Ende des Rahmens (400) des Raupenkettensatzes (200) befindet und ein Hydraulikmotor oder ein Elektromotor ist.

25. Maschine nach einem der vorhergehenden Ansprüche,
**dadurch gekennzeichnet, dass** die Rahmenmodule (A1, A3), die schwenkbar verbunden sind, an allen ihren Raupenkettensätzen (200) Antriebsmotoren (M1) umfassen.

26. Maschine nach einem der vorhergehenden Ansprüche,
**dadurch gekennzeichnet, dass** der Ausleger (11) außerdem ein Gelenk umfasst, auf dem er sich auch mit Bezug auf die Kabine (10) um die vertikale Achse (Y1) dreht.

## Revendications

1. Machine de travail polyvalente se déplaçant sur des voies mécanisées (200a),
dan laquelle
la machine comprend un chariot supérieur (B), et en dessous de celui-ci, un chariot inférieur (A) qui comprend des modules de cadre (A1, A100, A3) qui sont interconnectés et dont le premier module de cadre (A1) comprend une bague de roulement (H) pour une cabine (10) du chariot supérieur (B), permettant à la cabine (10) de tourner librement avec un éperon (11), la structure de cabine (10) comprenant l'éperon (11) tournant avec elle, avec un outil, tel qu'un godet pouvant être accroché à celui-ci,
un deuxième module de cadre (A3) a été connecté de manière pivotante au premier module de cadre (A1), et entre les modules (A1, A3) se trouvent des cylindres (n1, n2) au moyen desquels s'effectue la direction du cadre de la machine,
le premier module de cadre (A1) comprend, sur ses deux côtés, des ensembles de voie mécanisée (200), qui sont tous deux supportés par leurs supports (300) et pivotés pour basculer (flèche S1) autour de l'axe transversal (z) au moyen d'un roulement (900) sur le support (300), ce qui permet à la machine de se déplacer en douceur sur un terrain variable,
et le deuxième module de cadre (A3) comprend un cadre (700) et, dans celui-ci, des poutres de cadre (700a) longitudinales et des ensembles de voie mécanisée (200) sur les deux côtés du cadre (700), qui sont pivotés pour basculer (flèche S1) tout en étant supportés par leurs supports (300) et roulements (900) sur le support (300) autour de l'axe transversal Z, et pour les deux ensembles de voie mécanisée (200) d'au moins le premier module de cadre (A1), un moteur d'entraînement (M1) est destiné à déplacer la voie mécanisée (200a) de ce dernier, **caractérisée en ce que** le cadre (700) du deuxième module de cadre (A3) comprend, en haut de celui-ci, une unité de charge (12) qui est une plateforme interchangeable.

2. Machine selon la revendication 1,
**caractérisée en ce que** le deuxième module de cadre (A3) comprend, en haut des poutres de cadre du cadre (700), un dispositif à crochet (15) qui y est connecté par son cadre (15a), qui comprend un/des cylindre(s) hydraulique(s) (16a, 16b) et un cadre (17) du dispositif à crochet, qui est pivoté par un roulement (T) sur une extrémité du cadre pour être tourné par le cylindre hydraulique (16a, 16b), permettant à un crochet (K) sur l'autre extrémité du cadre (17) de se connecter à une barre de préhension (L) sur la plateforme interchangeable, permettant à la plateforme interchangeable d'être soulevée par le dispositif à crochet (15) et abaissée, en haut du cadre (700) du deuxième module de cadre (A3), et du haut de celui-ci vers le sol.

3. Machine selon la revendication 1,
**caractérisée en ce qu'**en haut des poutres de cadre (700a) du cadre du deuxième module de cadre (A3), a été monté un dispositif de câble (14) qui comprend des rails inclinables (P) qui, sur une extrémité, comprennent un/des roulement(s), supporté(s) par lequel/lesquels les rails (P) peuvent être inclinés, et **en ce qu'**entre le cadre (J) du dispositif de câble (14) et les rails (P), se trouve/trouvent un/des cylindre(s) hydraulique(s) (18a, 18b) se connectant de manière pivotante au cadre (J) du dispositif de câble, et de manière pivotante sur l'autre extrémité des rails (P), et **en ce qu'**il y a des câbles qui peuvent être enroulés par un moteur (M1) pour enrouler des rouleaux (O), et l'autre extrémité du câble est connectable à une plateforme interchangeable, moyennant quoi, lorsque les rails (P) ont été inclinés par le dispositif de cylindre (18a, 18b), une charge telle que la plateforme interchangeable peut être soulevée en utilisant le moteur (M1) sur les rails, et la plateforme interchangeable peut être abaissée par gravité vers le sol en inclinant les rails (P).

4. Machine selon l'une quelconque des revendications précédentes,
**caractérisée en ce que**
le roulement (900) pour le basculement de l'ensemble de voie mécanisée (200) est formé sur la surface supérieure du support (300) comme un roulement lisse ou une bague de roulement comprenant des éléments de rouleau (f).

5. Machine selon l'une quelconque des revendications précédentes,
**caractérisée en ce qu'**entre le premier module de cadre (A1) et le deuxième module de cadre (A3) se trouve un troisième module (A100) de cadre qui dispose de cylindres (n1, n2) au moyen desquels s'effectue la direction du cadre de la machine, et qui est connecté bout à bout au premier et au deuxième module de cadre (A1, A3) qui sont connectés à celui-ci.

6. Machine selon la revendication 5,
**caractérisée en ce que** le troisième module (A100) de cadre comprend des moyens de connexion (D10, D20) sur les deux extrémités du module pour connecter le module (A100) de manière détachable aux parties de cadre de la machine de travail polyvalente, et **en ce que** le module (A100) de direction de cadre est formé de deux moitiés de cadre (101, 104) qui sont pivotées l'une par rapport à l'autre, et **en ce que** les moitiés de cadre comprennent entre elles une rotule (107) permettant aux moitiés de cadre (101, 104) de tourner l'une par rapport à l'autre, et **en ce que** le premier cylindre (n1) est connecté de manière pivotante, sur son extrémité, à la première moitié (101) de sa partie de cadre tournante (R10), et **en ce que** le cylindre est connecté de manière pivotante, sur sa deuxième extrémité, à la partie de cadre (R20), et de même, le deuxième cylindre (n2) est connecté de manière pivotante, à la première moitié (101), à sa partie de cadre tournante (R10), et connecté de manière pivotante, sur sa deuxième extrémité, à la partie de cadre (R20), et **en ce que** le premiers (D110) des moyens de connexion sont situés dans la première moitié (101) et les deuxièmes moyens de connexion (D20) sont situés dans la deuxième moitié (104) du module (A100).

7. Machine selon la revendication 6,
**caractérisée en ce que** la première partie de cadre (101) comprend une partie de cadre de base (R20), et comprend, connectée en rotation à celle-ci, une partie de cadre mobile (R10) qui comprend une bride de connexion (D10), et un joint tournant (108) se trouve entre les parties de cadre (R10 et R20), et **en ce que** le tour de rotation de la partie de cadre mobile (R10) est réalisé avec des cylindres (n1, n2), et **en ce que** la partie de cadre de base (R20) et les structures qui y sont connectées sont rotatives par rapport à la deuxième moitié (104) supportée par le roulement (107), et **en ce que** la deuxième moitié (104) est connectable au module de charge (A3) et **en ce que** la première moitié (101) est connectée au module comprenant la cabine (10).

8. Machine selon la revendication 6 ou 7,
**caractérisée en ce que** la rotule (107) est formée de rouleaux de roulement sur une bague ou des billes de roulement, ou des roulements à cône.

9. Machine selon l'une quelconque des revendications 6, 7 ou 8,
**caractérisée en ce que** la rotule (107) peut être bloquée pendant la durée du chargement par un frein (60), qui empêche la rotation des moitiés (101, 104) l'une par rapport à l'autre pendant la durée du blocage par le frein (60), ce qui rend la machine stable pendant son chargement.

10. Machine selon l'une quelconque des revendications précédentes,
**caractérisée en ce que** les modules de cadre (A1 ,A100, A3) sont interconnectés par soudure ou par joints à bride qui sont mis en œuvre par l'utilisation de boulons et/ou de vis ou similaires.

11. Machine selon l'une quelconque des revendications précédentes,
**caractérisée en ce que** le premier module de cadre (A1) comprend dans sa région centrale une bague de roulement (H) pour la cabine (10), et des brides de connexion (D) sur les deux extrémités.

12. Machine selon l'une quelconque des revendications précédentes, **caractérisée en ce que** l'éperon (11) est un éperon comprenant un godet.

13. Machine selon l'une quelconque des revendications précédentes 1 à 11,
**caractérisée en ce que** l'éperon (11) comprend une benne ou analogues pour manipuler les objets et la terre.

14. Machine selon l'une quelconque des revendications précédentes,
**caractérisée en ce que**, comme module avant (A4) du chariot inférieur (A), il y a un module comprenant une lame de bulldozer.

15. Machine selon l'une quelconque des revendications précédentes,
**caractérisée en ce que** le cadre (400) de l'ensemble de voie mécanisée (200) est longitudinal et rigide et comprend, sur les deux extrémités, des poulies pour la voie mécanisée (200a), et **en ce que** l'ensemble de voie mécanisée (200) comprend un support (300) permettant à l'ensemble de voie mécanisée (200) de tourner tout en étant supporté par celui-ci autour de l'axe géométrique horizontal Z, et **en ce que** la voie mécanisée (200a) est entraînée en avant et en arrière par le moteur d'entraînement (M1).

16. Machine selon l'une quelconque des revendications précédentes,
**caractérisée en ce que** le support (300) comprend des canaux d'huile (Ö) ou des passages pour des fils électriques, destinés à conduire de l'huile hydraulique ou des fils électriques au moteur (M1), qui est un moteur hydraulique ou un moteur électrique.

17. Machine selon l'une quelconque des revendications précédentes,
**caractérisée en ce que** la machine est commandée à distance et comprend des moyens de commande à distance, tels qu'une caméra ou des caméras, et **en ce que** la/les caméra(s) est/sont avantageusement des caméras 3D pour former une image tridimensionnelle afin de diriger la machine et d'effectuer des tâches de manière commandée à distance, et **en ce que** les moyens de commande à distance sont au moins partiellement situés dans la cabine (10) de la machine.

18. Machine selon l'une quelconque des revendications précédentes,
**caractérisée en ce que** des voies mécanisées (200a) sur le même cadre peuvent être commandées à des vitesses différentes les unes par rapport aux autres et/ou commandées simultanément à des sens différents pour changer le sens de déplacement de la machine.

19. Machine selon l'une quelconque des revendications précédentes,
**caractérisée en ce que** la voie mécanisée (200a) comprend au moins avantageusement deux parcours de voie mécanisée qui vont obliquement par rapport aux parcours horizontaux, sur les extrémités de l'ensemble de voie mécanisée cadre (400).

20. Machine selon l'une quelconque des revendications précédentes,
**caractérisée en ce que** la machine comprend une partie de poutre, c'est-à-dire, une poutre vers le bas (800), allant vers le bas à partir de la poutre de cadre (700, 7000) du module de cadre (A1, A3) du chariot inférieur (A) de la machine, pour augmenter la garde au sol de la machine qui constitue le support (300) pour l'ensemble de voie mécanisée (200).

21. Machine selon l'une quelconque des revendications précédentes,
**caractérisée en ce que** l'ensemble de voie mécanisée (200) comprend un tel support (300) qu'il présente un roulement (900) et des éléments de rouleau (f) sur sa bague de roulement, permettant à une moitié de roulement (t1) de se connecter au support (300) et à l'autre moitié de roulement (t2) de se connecter au cadre (700) de l'ensemble de voie mécanisée (200), permettant aux éléments de rouleau (f) de se trouver entre les moitiés de roulement (t1 et t2), permettant à l'ensemble de voie mécanisée de basculer (flèche S1).

22. Machine selon l'une quelconque des revendications précédentes,
**caractérisée en ce que** les lignes hydrauliques ou électriques (Ö) du moteur (M1) qui déplace la voie mécanisée sont amenées au milieu du roulement (900) et connectées au moteur (M1) qui entraîne sa roue dentée (68) et qui déplace la voie mécanisée et la machine.

23. Machine selon l'une quelconque des revendications précédentes,
**caractérisée en ce qu'**au milieu du roulement (900) se trouve une douille traversante (65) non rotative à laquelle les fils (Ö) sont connectés, et **en ce que** les fils (Ö) ont d'abord été conduits de l'intérieur de la poutre creuse vers le bas (800) à la douille traversante (65), et de celle-ci au moteur (M1) déplaçant la voie mécanisée (200a) et la machine.

24. Machine selon l'une quelconque des revendications précédentes,
**caractérisée en ce que** le moteur (M1) réside à l'intérieur de la boucle de voie mécanisée de la voie mécanisée (200a) sur une extrémité du cadre (400) de l'ensemble de voie mécanisée (200), et est un moteur hydraulique ou un moteur électrique.

25. Machine selon l'une quelconque des revendications précédentes,
**caractérisée en ce que** les modules de cadre (A1, A3) connectés de manière pivotante entre eux comprennent des moteurs d'entraînement (Ml) sur tous leurs ensembles de voie mécanisée (200).

26. Machine selon l'une quelconque des revendications précédentes,
**caractérisée en ce que** l'éperon (11) comprend également un joint, sur lequel il tourne également par rapport à la cabine (10) autour de l'axe vertical (Y1).
